# EUROPEAN PATENT SPECIFICATION

(11) **EP 1 582 989 B1**
(45) Date of publication and mention of the grant of the patent: **30.04.2008**
(21) Application number: 05007113.3
(22) Date of filing: 31.03.2005
(51) Int. Cl.: G06F 13/40, G06F 13/28

(54) **Data transfer processing device and data transfer processing method**
Vorrichtung und Verfahren zur Datenübertragungsverarbeitung
Dispositif et méthode pour le traitement de transmission de données

(30) Priority: 02.04.2004 JP 2004110465
(43) Date of publication of application: 05.10.2005
(73) Proprietor: MATSUSHITA ELECTRIC INDUSTRIAL CO., LTD, Kadoma-shi, Osaka 571-8501 (JP)
(72) Inventor: Kotani, Atsushi, Ibaraki-shi Osaka 567-0878 (JP)
(74) Representative: Grünecker, Kinkeldey, Stockmair & Schwanhäusser Anwaltssozietät

(56) References cited:
- US-A- 5 130 981
- US-A- 5 781 799
- US-A- 6 067 595

## Description

### BACKGROUND OF THE INVENTION

### Field of the Invention

The present invention relates to a data transfer processing device and a data transfer processing method. In particular, the present invention relates to a data transfer processing device (for example, a bus bridge) and a data transfer processing method for performing data transfer between a plurality of system buses operating under different protocols or frequencies by direct memory access (DMA) transfer.

### Description of the Background Art

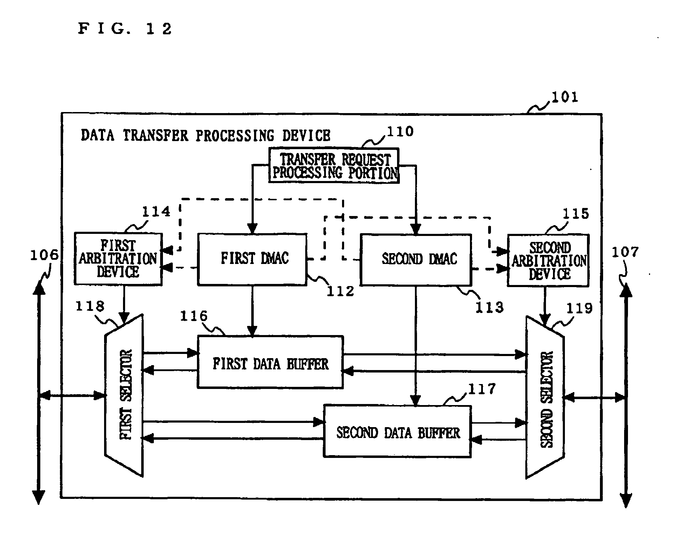

FIG. 12 shows an example of the configuration of a conventional data transfer processing device based on DMA transfer. In FIG. 12, a conventional data transfer processing device 101 is provided with a transfer request processing portion 110, a first direct memory access controller (DMAC) 112, a second DMAC 113, a first arbitration device 114, a second arbitration device 115, a first data buffer 116, a second data buffer 117, a first selector 118, and a second selector 119. The data transfer processing device 101 is connected between a first system bus 106 and a second system bus 107 and performs a data transfer process between the two system buses.

When internal or external data transfer becomes necessary, the transfer request processing portion 110 gives a DMA transfer request to the first DMAC 112 and/or the second DMAC 113. The first DMAC 112 controls the first data buffer 116 and the first arbitration device 114 in accordance with the DMA transfer request. The second DMAC 113 controls the second data buffer 117 and the second arbitration device 115 in accordance with the DMA transfer request. The first arbitration device 114 arbitrates a selecting operation of the first selector 118 based on the control by the first DMAC 112 and the second DMAC 113. The second arbitration device 115 arbitrates a selecting operation of the second selector 119 based on the control by the first DMAC 112 and the second DMAC 113. The first selector 118 accesses the first system bus 106 and selects between the first data buffer 116 and the second data buffer 117 according to the arbitration of the first arbitration device 114. The second selector 119 accesses the second system bus 107 and selects between the first data buffer 116 and the second data buffer 117 according to the arbitration of the second arbitration device 115. The first data buffer 116 and the second data buffer 117 are storage areas into which data that is being transferred is written temporarily.

Generally, in a data transfer processing device having a plurality of DMACs, the data buffers 116 and 117 for buffering a difference between frequencies or protocols of the system buses are allocated to the DMACs 112 and 113 respectively and exclusively as shown in FIG. 12. The following is an example in which, with the thus configured data transfer processing device 101, data is transferred from the first system bus 106 to the second system bus 107 by using the first DMAC 112. In this case, the following two methods for transferring data are conceivable.

In the first method for transferring data, the first DMAC 112 gains the right to access the first system bus 106 and stores a predetermined amount of data that is input from the first system bus 106 in the first data buffer 116. Then, after the data is stored, the first DMAC 112 gains the right to access the second system bus 107, and the data stored in the first data buffer 116 is output to the second system bus 107.

In the second method for transferring data, the first DMAC 112 gains the right to access the first system bus 106 and stores a predetermined amount of data that is input from the first system bus 106 in the first data buffer 116 sequentially. Herein, while the data is stored in the first data buffer 116, the first DMAC 112 gains the right to access the second system bus 107, and the data stored in the first data buffer 116 is sequentially output to the second system bus 107.

However, in the case of the first method for transferring data, data cannot be newly stored in the first data buffer 116 until all of the data stored in the first data buffer 116 has been output to the second system bus 107 completely. Therefore, the system buses cannot be used effectively, and thus this method lacks in practicability, for example, when a large amount of data is transferred.

Furthermore, in the case of the second method for transferring data, the one DMAC 112 continues to hold the right to access both of the first system bus 106 and the second system bus 107 for a long period of time, and thus neither of the system buses are released even in a period during which data transfer is not actually performed, so that other processes are affected. It is necessary to gain or release the access right every time between a period during which data transfer is performed and a period during which data transfer is not performed in order to avoid this effect, but there is also the problem that when a device wants to gain an access right, the device has to wait until the system bus is released if another device is using it. For example, see "Hitachi SuperH^{™} RISC engine SH7751 series hardware manual" by Hitachi, Ltd.
(http://www.renesas.com/avs/resource/japan/jpn/pdf/mpumcu/j60 2215_sh7751.pdf).

As described above, in a conventional data transfer processing device based on DMA transfer, data transfer is not performed effectively between system buses having different frequencies or protocols, and the system buses are not used effectively, for example, when a large amount of data is transferred. US-A-5 781 799 describes a method and arrangement for performing direct memory access in a computer system having multi-channel direct memory access (DMA) is provided with a host computer having a main memory and a processor that runs software, a system interface bus coupling the host computer and the main memory, and multiple DMA controllers, on separate chips, coupled to the system interface bus. These multiple DMA controllers provide the system with multiple input/output (I/O) channels. A common buffer pool having a plurality of buffers is accessible to each of the multiple channels for buffering data transferred to or from the host computer. A status queue is also provided, with each entry in the status queue indicating whether a corresponding buffer from the common pool of buffers is a free buffer available for use by one of the DMA channels in a DMA transaction. The status queue is searched for an entry in the status queue, which indicates whether its corresponding buffer is a free buffer, when a DMA transaction is to occur over one of the DMA channels. When a free buffer is found, the entry in the status queue and the free buffer are claimed by the DMA channel. The starting address of the free buffer is then determined and data is buffered within the free buffer. US-A-6 067 595 specifies an intelligent data bus interface using a triple-port memory having three independent data ports that provide simultaneous access to the data stored in the memory to two bi-directional data buses and to a data processor. The two data buses and the processor are coupled to separate data ports and each is able to independently access data in the triple-port memory at the full data rate of each. Because of the use of the triple-port memory, no data copying or moving is required in order to provide access to the data to the processor or the data buses. The intelligent data bus interface is particularly suitable for handling encryption/decryption, network protocol and PCI/SCI bridging at full speed at any of its ports without burdening a host processor.

### SUMMARY OF THE INVENTION

Therefore, an object of the present invention is to provide a data transfer processing device and a data transfer processing method in which the data transfer efficiency and the efficiency in the use of system buses are improved in data transfer by DMA transfer.

In accordance with the present invention, the foregoing objectives are realised as defined in the independent claims. Preferred embodiments are defined in the dependent claims.

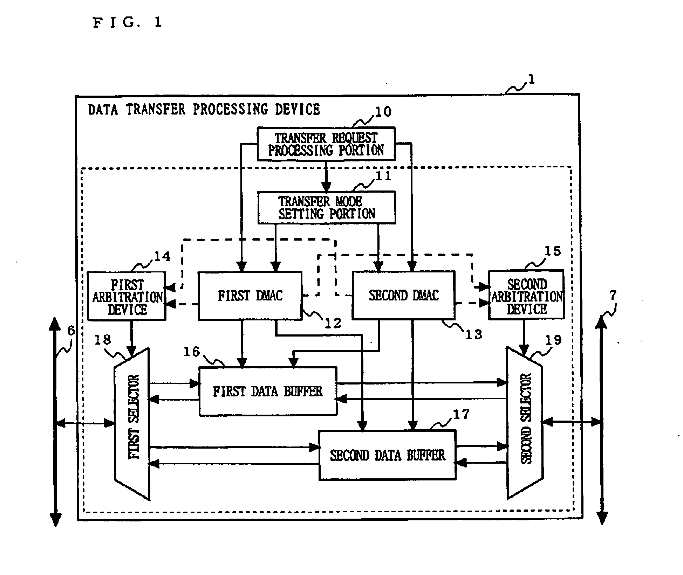

The embodiments 1, 2 and 5 (Figs. 1 to 5 and 9 - 10) are used for background explanation to facilitate the understanding of the invention.

As described above, according to the present invention, the number of data buffers used by DMACs for transferring data can be selected between a single and multiple data buffers in accordance with the kind of data that is to be transferred. Thus, the effect is achieved that the data transfer efficiency and the efficiency in the use of system buses can be improved. In particular, when a status setting portion for showing an operation status of DMACs is used, it is possible to lessen a processing load of the transfer request processing portion. Furthermore, when a data buffer arbitration control portion for arbitrating a right to use unused data buffers is used, it is possible to start data transfer immediately by using a released data buffer without waiting until the data transfer by the other DMAC using the data buffers is terminated. Furthermore, since a right to use data buffers is controlled in the case where specified responses (disconnection response) are received more often than the predetermined number of times from the device with which the data transfer is performed, if the data transfer efficiency becomes poor in mid-course, it is possible to change the buffer configuration dynamically and perform another data transfer in parallel. Furthermore, with respect to a multi-port data buffer, the area division is changed in accordance with the amount of data that is requested to transfer. Thus, regardless of a status in which data buffers for the other DMAC are used, it is possible to perform data transfer with an optimal data buffer configuration for the requested data transfer.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram showing the configuration of a data transfer processing device according to a first embodiment
FIG. 2 is a flowchart showing the procedure of a data transfer processing method according to the first embodiment ;
FIG. 3 is a diagram showing an example of data transfer performed by a DMAC in multi-buffer mode.
FIG. 4 is a block diagram showing the configuration of a data transfer processing device according to a second embodiment ;
FIG. 5 is a flowchart showing the procedure of a data transfer processing method according to the second embodiment ;
FIG. 6 is a block diagram showing the configuration of a data transfer processing device according to a third embodiment of the present invention;
FIG. 7 is a flowchart showing the procedure of a data transfer processing method according to the third embodiment of the present invention;
FIG. 8 is a block diagram showing the configuration of a data transfer processing device according to a fourth embodiment of the present invention;
FIG. 9 is a block diagram showing the configuration of a data transfer processing device according to a fifth embodiment ;
FIG. 10 is a flowchart showing the procedure of a data transfer processing method according to the fifth embodiment ;
FIG. 11A is a diagram showing an example of information in a buffer area correspondence table;
FIG. 11B is a diagram showing an example of an allocation of a data buffer; and
FIG. 12 is a block diagram showing the configuration of a conventional data transfer processing device.

### DESCRIPTION OF THE PREFERRED EMBODIMENTS

The data transfer processing device of the present invention can perform data transfer between a plurality of system buses operating under different protocols or frequencies. In the following embodiments, the data transfer processing device of the present invention will be described taking the case in which data transfer is performed between two system buses as an example. In the embodiments, an example in which both system buses are arranged outside of the data transfer processing device will be described. However, when the data transfer processing device is a terminating device, either one of the system buses is arranged inside of the data transfer processing device.

### [First embodiment]

FIG. 1 is a block diagram showing the configuration of a data transfer processing device 1 according to a first embodiment. In FIG. 1, the data transfer processing device 1 according to the first embodiment is provided with a transfer request processing portion 10, a transfer mode setting portion 11, a first DMAC 12, a second DMAC 13, a first arbitration device 14, a second arbitration device 15, a first data buffer 16, a second data buffer 17, a first selector 18, and a second selector 19. The data transfer processing portion 10 is connected to a first system bus 6 and a second system bus 7, and performs a data transfer process between the two system buses. The transfer request processing portion 10 is typically configured by, for example, a digital signal processor (DSP), a central processing unit (CPU), and a program memory (ROM), but the data transfer processing device of the present embodiment (and that of the following embodiments) is not limited to this configuration. For example, only the CPU may be arranged outside of the data transfer processing device, or the transfer request processing portion 10 may be arranged outside of the data transfer processing device.

First, each component of the data transfer processing device 1 will be outlined.

When internal or external data transfer becomes necessary, the transfer request processing portion 10 gives a DMA transfer request to the first DMAC 12 and/or the second DMAC 13 and sets a predetermined transfer mode for the transfer mode setting portion 11. In accordance with the instruction from the transfer request processing portion 10, the transfer mode setting portion 11 sets a transfer mode, which indicates whether both of the first data buffer 16 and the second data buffer 17 are used or only one of them is used. More specifically, the transfer mode setting portion 11 functions as a buffer allocating portion. For this transfer mode setting portion 11, for example, a register is used. The first DMAC 12 controls the first arbitration device 14, the first data buffer 16 and the second data buffer 17, in accordance with the DMA transfer request and the transfer mode set by the transfer mode setting portion 11. The second DMAC 13 controls the second arbitration device 15, the first data buffer 16 and the second data buffer 17, in accordance with the DMA transfer request and the transfer mode set by the transfer mode setting portion 11. The first arbitration device 14 arbitrates a selecting operation of the first selector 18 based on the control by the first DMAC 12 and the second DMAC 13. The second arbitration device 15 arbitrates a selecting operation of the second selector 19 based on the control by the first DMAC 12 and the second DMAC 13. The first selector 18 accesses the system bus 6 and selects between the first data buffer 16 and the second data buffer 17 according to the arbitration of the first arbitration device 14. The second selector 19 accesses the system bus 7 and selects between the first data buffer 16 and the second data buffer 17 according to the arbitration of the second arbitration device 15. The first data buffer 16 and the second data buffer 17 are storage areas into which data that is being transferred is written temporarily.

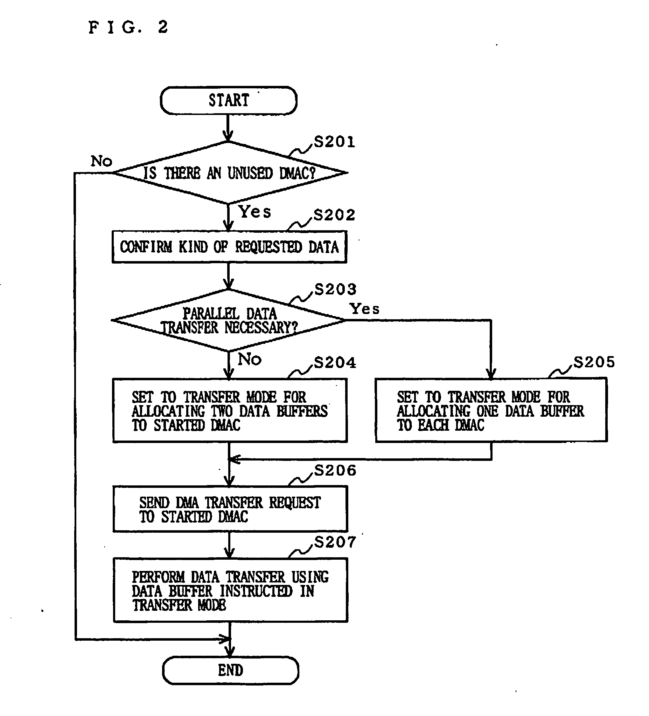

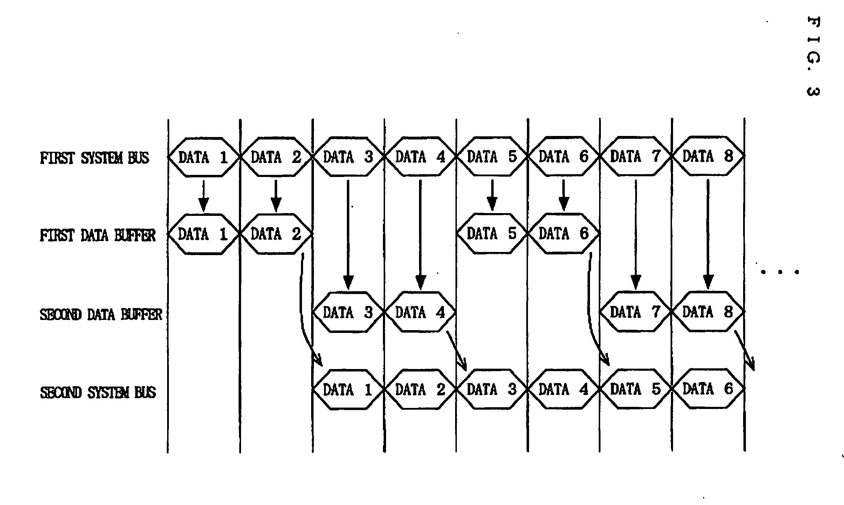

Next, a processing operation of the thus configured data transfer processing device 1 will be described with further reference to FIGS. 2 and 3. FIG. 2 is a flowchart showing the procedure of a data transfer processing method that is performed by the data transfer processing device 1 according to the first embodiment. The process in FIG. 2 is started when data transfer becomes newly necessary at the transfer request processing portion 10.

First, the transfer request processing portion 10 determines whether or not there is an unused DMAC that is not performing data transfer, that is, a DMAC that has not been started (step S201). If there is an unused DMAC, the transfer request processing portion 10 confirms the kind of data that is newly required to be transferred or that is being transferred already (step S202). Then, based on the result of this confirmation, the transfer request processing portion 10 determines whether or not parallel data transfer is necessary (step S203). For example, when the data that is to be transferred includes two different kinds of data such as screen frame data for still image display and data for arithmetic processing, it is determined that parallel data transfer is necessary. On the other hand, when the data that is to be transferred includes one kind of data such as high-speed and large-volume data for moving image display, it is determined that parallel data transfer is not necessary.

When it is determined that parallel data transfer is necessary, the transfer request processing portion 10 starts the unused DMAC that has been determined in step S201 and sets the transfer mode for respectively allocating the first data buffer 16 to the first DMAC 12 and the second data buffer 17 to the second DMAC 13 (single buffer mode) in the transfer mode setting portion 11 (step S204). On the other hand, if it is determined that parallel data transfer is not necessary, the transfer request processing portion 10 sets the transfer mode for allocating both of the first data buffer 16 and the second data buffer 17 to the first DMAC 12 or the second DMAC 13 that has been started at that time (multi-buffer mode) in the transfer mode setting portion 11 (step S205). Subsequently, the transfer request processing portion 10 gives a DMA transfer request to the DMAC that has been started (step S206).

The first DMAC 12 and/or the second DMAC 13 that has received the DMA transfer request performs data transfer in accordance with the transfer mode set by the transfer mode setting portion 11, using the data buffer instructed by the transfer mode (step S207). It should be noted that when there is no unused DMAC in step S201, this process is ended because the data transfer request cannot be met.

FIG. 3 is a diagram illustrating an example of data transfer performed by the first DMAC 12 in multi-buffer mode. As shown in FIG. 3, in this multi-buffer mode, from the same moment at which transfer of data stored in the first data buffer 16 is started, subsequent data can be stored using the second data buffer 17. The transfer of the data stored in the second data buffer 17 is started after the transfer of the data stored in the first data buffer 16 is completed. Conversely, from the same moment at which transfer of the data stored in the second data buffer 17 is started, then the subsequent data can be stored using the first data buffer 16. Subsequently, this process is performed repeatedly until the data that is to be transferred is ended. In this multi-buffer mode, data transfer can be performed at a higher speed than in single buffer mode.

As described above, in the data transfer processing device and method according to the first embodiment , the number of data buffers used by DMACs for transferring data can be switched between a single and multiple data buffers in accordance with the kind of data that is to be transferred. Therefore, data transfer that is requested by the system, such as parallel transfer of two different kinds of data or high-speed transfer of large-volume data, can be performed appropriately. Thus, the data transfer efficiency and the efficiency in the use of system buses can be improved.

### [Second embodiment]

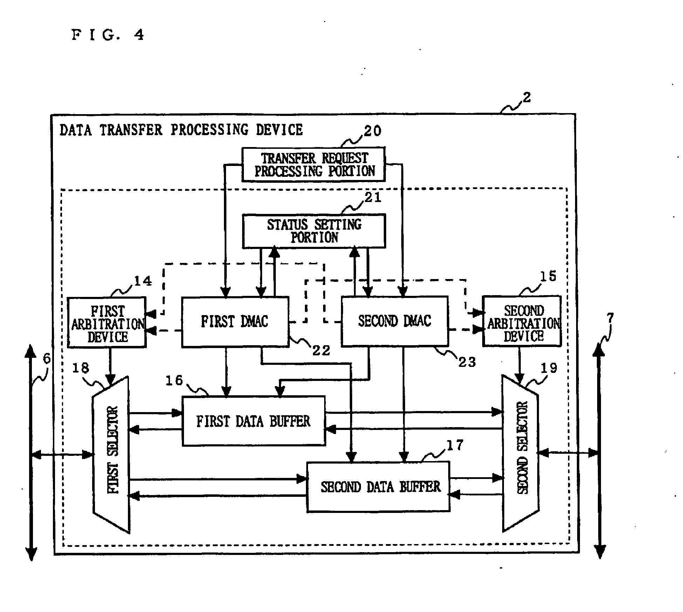

FIG. 4 is a block diagram showing the configuration of a data transfer processing device 2 according to a second embodiment. In FIG. 4, the data transfer processing device 2 according to the second embodiment is provided with a transfer request processing portion 20, a status setting portion 21, a first DMAC 22, a second DMAC 23, a first arbitration device 14, a second arbitration device 15, a first data buffer 16, a second data buffer 17, a first selector 18, and a second selector 19. As shown in FIG. 4, the configuration of the data transfer processing device 2 according to the second embodiment is different from the configuration of the data transfer processing device 1 according to the first embodiment with regard to the transfer request processing portion 20, the status setting portion 21, the first DMAC 22, and the second DMAC 23. Hereinafter, the data transfer processing device 2 according to the second embodiment will be described focusing on these different components.

When internal or external data transfer becomes necessary, the transfer request processing portion 20 gives a DMA transfer request to the first DMAC 22 and/or the second DMAC 23. The status setting portion 21 sets an operation status of the first DMAC 22 and the second DMAC 23, such as whether or not data transfer is performed and which data buffer is used for performing the data transfer. More specifically, the status setting portion 21 functions as a buffer allocating portion. For this status setting portion 21, for example, a register is used. The first DMAC 22 controls the first arbitration device 14, the first data buffer 16 and the second data buffer 17, in accordance with the DMA transfer request and the operation status set by the status setting portion 21. The second DMAC 23 controls the second arbitration device 15, the first data buffer 16 and the second data buffer 17, in accordance with the DMA transfer request and the operation status set by the status setting portion 21.

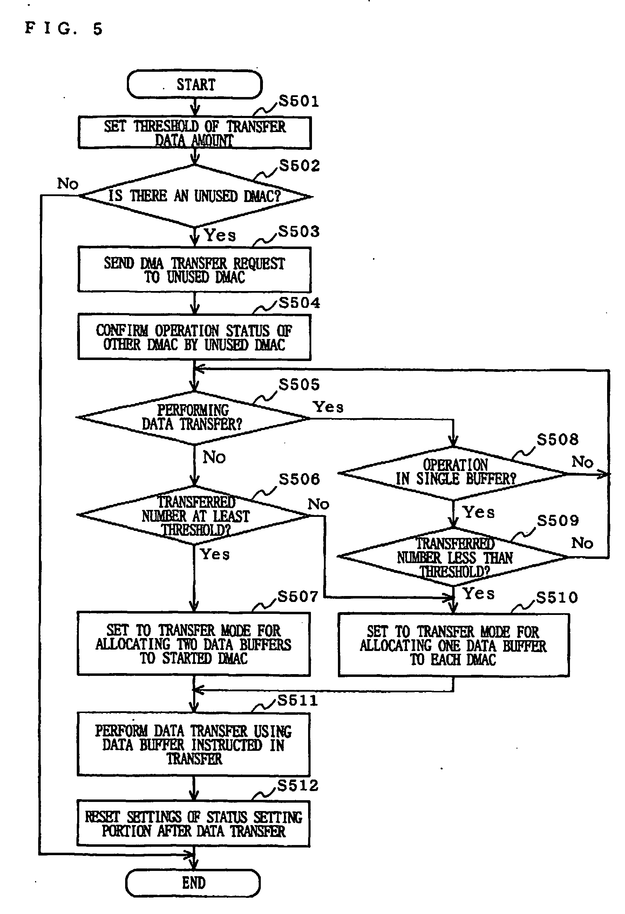

FIG. 5 is a flowchart showing the procedure of a data transfer processing method that is performed by the data transfer processing device 2 according to the second embodiment. The process in FIG. 5 is started when data transfer becomes newly necessary at the transfer request processing portion 20.

First, the transfer request processing portion 20 sets the threshold of the amount of data that is to be transferred in the first DMAC 22 and the second DMAC 23 (step S501). This threshold is used to determine whether each of the DMACs performs parallel data transfer using two data buffers (multi-buffer) or normal data transfer using one data buffer (single buffer). Then, the transfer request processing portion 20 determines whether or not there is an unused DMAC that is not performing data transfer, that is, a DMAC that has not been started (step S502). If there is an unused DMAC, the transfer request processing portion 20 gives a DMA transfer request to one unused DMAC (step S503). This embodiment is explained for the case that the unused DMAC is the first DMAC 22. The first DMAC 22 that has received the DMA transfer request confirms the operation status set by the status setting portion 21 and checks whether or not the second DMAC 23, which is the other DMAC, is performing data transfer and whether the data transfer is performed in multi-buffer or single buffer mode (step S504).

As the result of the check, when the second DMAC 23 is not performing data transfer, the first DMAC 22 sets, in the status setting portion 21, the transfer mode for allocating both of the first data buffer 16 and the second data buffer 17 to itself (multi-buffer) if the amount of data transfer required by the DMA transfer request is at least the predetermined threshold, or the transfer mode for allocating only the first data buffer 16 to itself (single buffer) if the amount is less than the threshold (steps S505 to S507, and S510). On the other hand, when the second DMAC 23 is performing data transfer, the first DMAC 22 sets, in the status setting portion 21, the transfer mode for allocating only the first data buffer 16 to itself (single buffer) if the data transfer is performed in single buffer mode and the amount of data transfer required by the DMA transfer request is less than the predetermined threshold (steps S508 to 510). In all other cases, the first DMAC 22 waits until the data transfer by the second DMAC 23 is finished, that is, until the second data buffer 17 is released.

The first DMAC 22 and/or the second DMAC 23 performs data transfer according to the operation status set by the status setting portion 21 and using the instructed data buffer (step S511). Then, after the data transfer is finished, the first DMAC 22 or the second DMAC 23 resets the operation status set in the status setting portion 21 (step S512). It should be noted that when there is no unused DMAC in step S502, this process is terminated because the data transfer request cannot be met.

As described above, in the data transfer processing device and method according to the second embodiment, a status setting portion indicating an operation status of the DMACs is used, and thus one DMAC can determine an operation status of the other DMAC and select between a single and multiple data buffers that are to be used in data transfer. Thus, in addition to the effect of the first embodiment, it is possible to lessen a processing load of the transfer request processing portion.

### [Third embodiment]

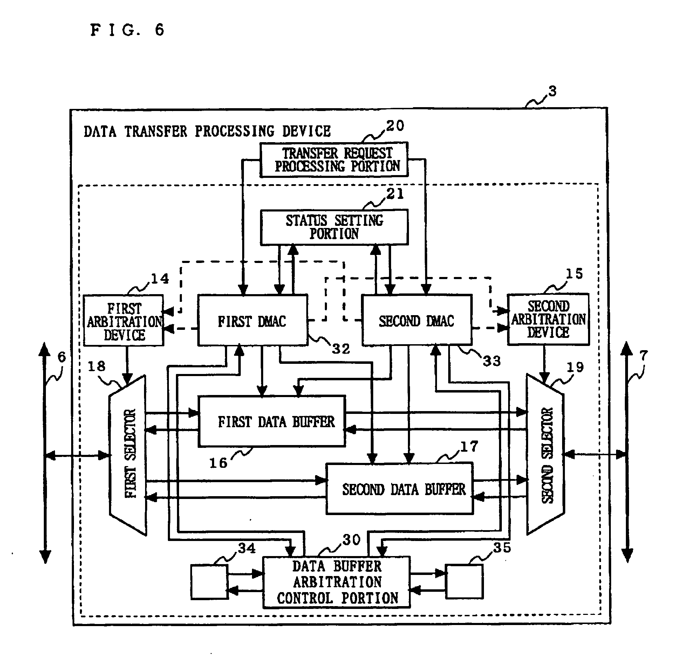

FIG. 6 is a block diagram showing the configuration of a data transfer processing device 3 according to a third embodiment of the present invention. In FIG. 6, the data transfer processing device 3 according to the third embodiment is provided with a transfer request processing portion 20, a status setting portion 21, a first DMAC 32, a second DMAC 33, a first arbitration device 14, a second arbitration device 15, a first data buffer 16, a second data buffer 17, a first selector 18, a second selector 19, a data buffer arbitration control portion 30, a first data buffer status flag 34, and a second data buffer status flag 35. As shown in FIG. 6, the configuration of the data transfer processing device 3 according to the third embodiment is different from the configuration of the data transfer processing device 2 according to the second embodiment with regard to the first DMAC 32, the second DMAC 33, the data buffer arbitration control portion 30, the first data buffer status flag 34, and the second data buffer status flag 35. Hereinafter, the data transfer processing device 3 according to the third embodiment will be described focusing on these different components.

The first DMAC 32 controls the first arbitration device 14, the first data buffer 16 and the second data buffer 17 in accordance with the DMA transfer request and the operation status set by the status setting portion 21. The second DMAC 33 controls the second arbitration device 15, the first data buffer 16 and the second data buffer 17 in accordance with the DMA transfer request and the operation status set by the status setting portion 21. When the first data buffer 16 is in use, the first data buffer status flag 34 is set. When the second data buffer 17 is in use, the second data buffer status flag 35 is set. The data buffer arbitration control portion 30 arbitrates use of the first data buffer 16 and the second data buffer 17 using the first data buffer status flag 34 and the second data buffer status flag 35. This data buffer arbitration control portion 30 functions as a buffer allocating portion together with the status setting portion 21.

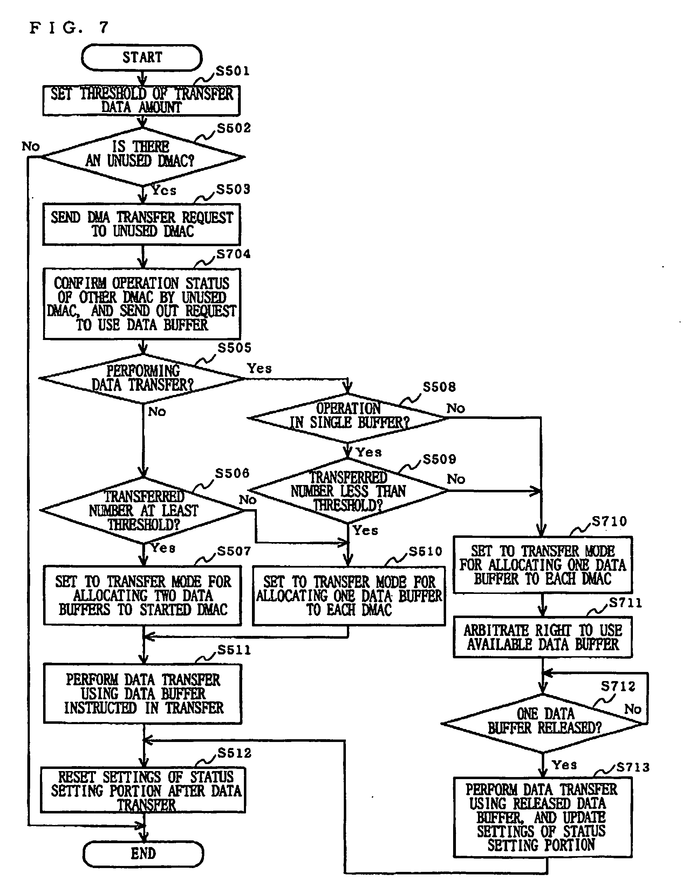

FIG. 7 is a flowchart showing the procedure of a data transfer processing method that is performed by the data transfer processing device 3 according to the third embodiment. In FIG. 7, steps performing the same processes as in FIG. 5 bear the same step number and their further explanation has been omitted.

When a DMA transfer request is given by the transfer request processing portion 20, the first DMAC 32, which is an unused DMAC, confirms an operation status set by the status setting portion 21 and checks whether or not the second DMAC 33, which is the other DMAC, is performing data transfer and whether the data transfer is performed in multi-buffer or single buffer mode (step S704). Simultaneously, the first DMAC 32 sends out a request to use data buffers to the data buffer arbitration control portion 30 (step S704).

When the second DMAC 33 is performing the data transfer and the data transfer is performed in multi-buffer mode or the amount of data transfer required by the DMA transfer request is at least the predetermined threshold, the data buffer arbitration control portion 30 that has received the request to use data buffers sets, in the status setting portion 21, the transfer mode for allocating only the first data buffer 16 to itself (single buffer) (step S710) and arbitrates a right to use available data buffers (step S711). More specifically, the data buffer arbitration control portion 30 determines that data transfer has terminated in either of the first data buffer 16 or the second data buffer 17 (data buffer is released) (step S712), and further arbitrates the released data buffer (step S713). For example, when the first data buffer 16 is released, the data buffer arbitration control portion 30 clears the right of the second DMAC 33 to use the first data buffer 16. Consequently, the second DMAC 33 performs the subsequent data transfer in single data buffer mode. Then, the data buffer arbitration control portion 30 allows the first DMAC 32 the right to use the first data buffer 16 that is released from the second DMAC 33. Consequently, the first DMAC 32 can newly start data transfer. It should be noted that the settings at the status setting portion 21 are updated in accordance with this arbitration process (step S713).

As described above, in the data transfer processing device and method according to the third embodiment of the present invention, a data buffer arbitration control portion is used for arbitrating a right to use unused data buffers. Therefore, even when one DMAC is performing data transfer while occupying a plurality of data buffers, it is possible to temporarily divert occasionally generated periods during which a data buffer is not used to the other DMAC. Thus, it is possible to start data transfer immediately by using a released data buffer without waiting until the data transfer by the other DMAC is ended.

It should be noted that in order not to allow a data buffer to be released, it is possible to notify the priority of the data transfer together with the request, when the DMACs send a request to use data buffers to the data buffer arbitration control portion 30.

### [Fourth embodiment]

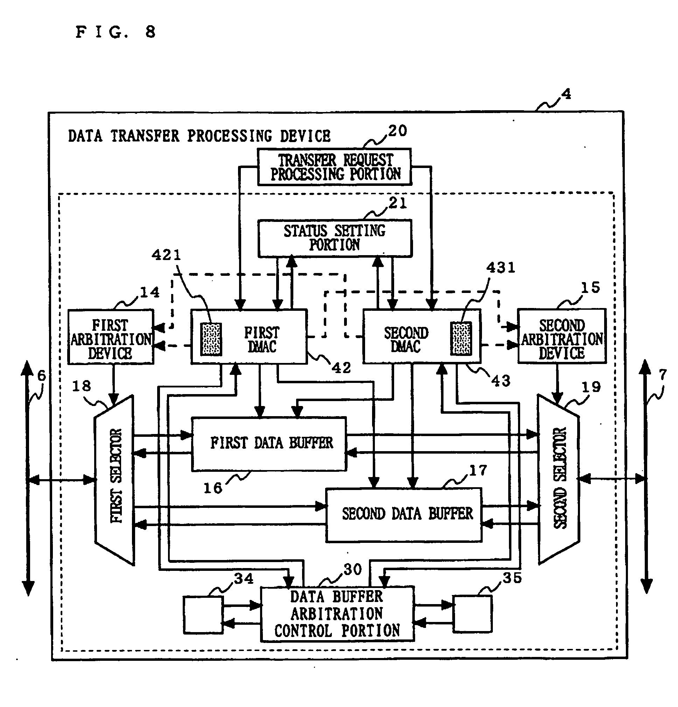

FIG. 8 is a block diagram showing the configuration of a data transfer processing device 4 according to a fourth embodiment of the present invention. In FIG. 8, the data transfer processing device 4 according to the fourth embodiment is provided with a transfer request processing portion 20, a status setting portion 21, a first DMAC 42, a second DMAC 43, a first arbitration device 14, a second arbitration device 15, a first data buffer 16, a second data buffer 17, a first selector 18, a second selector 19, a data buffer arbitration control portion 30, a first data buffer status flag 34, and a second data buffer status flag 35. As shown in FIG. 8, the configuration of the data transfer processing device 4 according to the fourth embodiment is different from the configuration of the data transfer processing device 3 according to the third embodiment with regard to the first DMAC 42 and the second DMAC 43. Hereinafter, the data transfer processing device 4 according to the fourth embodiment will be described focusing on these different components.

The first DMAC 42 is configured in such a manner that a disconnection counting portion 421 is included in the above-described first DMAC 32. The second DMAC 43 is configured in such a manner that a disconnection counting portion 431 is included in the above-described second DMAC 33. When the first DMAC 42 and the second DMAC 43 perform data transfer to the system bus 6 or 7, the disconnection counting portions 421 and 431 count and retain the number of times of disconnections by the device to which the data is transferred, in units of data buffers. For these disconnection counting portions 421 and 431, a register is used, for example.

The transfer request processing portion 20 gives a DMA transfer request to the first DMAC 42 and the second DMAC 43 when necessary, and the first DMAC 42 and the second DMAC 43 that have received the request start data transfer. Here, a case will be described in which the first DMAC 42 starts data transfer from the system bus 6 to the system bus 7, occupying both of the first data buffer 16 and the second data buffer 17. When the system bus 6 is a bus such as a PCI bus in which continuous transfer and transfer disconnection occur, the device to which the data is transferred may disconnect the transfer temporarily while data is being stored from the systembus 6 into the first data buffer 16. This depends on the number of stages of a pre-reading data buffer (for example, a prefetch FIFO) of the device to which the data is transferred or a status of the internal process thereof. The first DMAC 42 lets the disconnection counting portion 421 count and retain the number of times of disconnections during the transfer and compares this number with a predetermined number. When disconnections during the transfer happen more often than that predetermined number, if the first data buffer 16 and the second data buffer 17 are used in parallel, the first DMAC 42 releases one of the data buffers. At that time, if the second DMAC 43 receives a new data transfer request, data transfer is started immediately by using the released data buffer.

As described above, in the data transfer processing device and method according to the fourth embodiment of the present invention, a disconnection counting portion is used, and thus the right to use data buffers is controlled in the case where specified responses are received more often than a predetermined number of times from the device to which the data is transferred. Therefore, even when data transfer with a high priority is performed, if the data transfer efficiency becomes poor in mid-course, it is possible to change the buffer configuration dynamically and perform another data transfer in parallel. Thus, it is possible to enhance the data transfer efficiency of the entire system.

In the fourth embodiment, a case has been described in which a disconnection counting portion is used in the configuration of the data transfer processing device 3 according to the third embodiment, but it can be used also in the configuration of the data transfer processing device 2 according to the second embodiment.

### [Fifth embodiment]

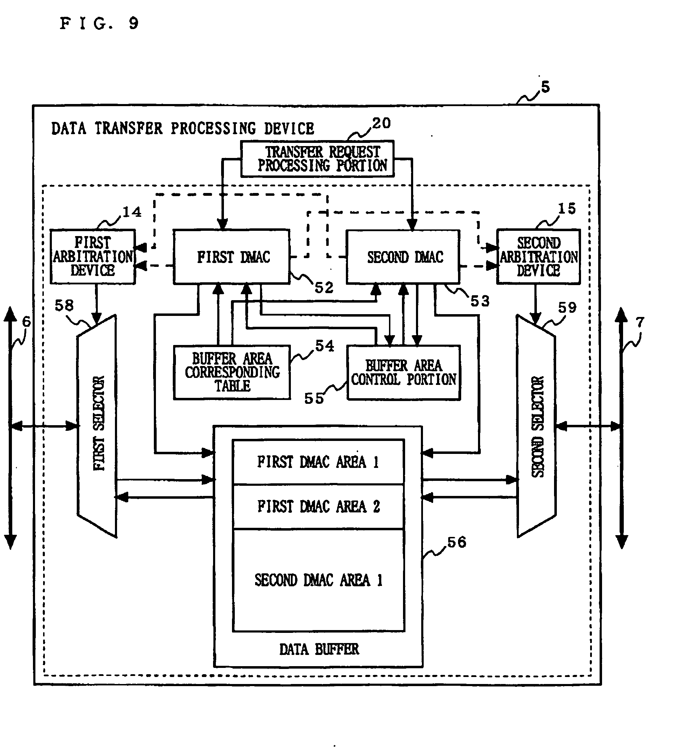

FIG. 9 is a block diagram showing the configuration of a data transfer processing device 5 according to a fifth embodiment. In FIG. 9, the data transfer processing device 5 according to the fifth embodiment is provided with a transfer request processing portion 20, a first DMAC 52, a second DMAC 53, a buffer area correspondence table 54, a buffer area control portion 55, a first arbitration device 14, a second arbitration device 15, a data buffer 56, a first selector 58, and a second selector 59. As shown in FIG. 9, the configuration of the data transfer processing device 5 according to the fifth embodiment is different from the configuration of the data transfer processing device 2 according to the second embodiment with regard to the first DMAC 52, the second DMAC 53, the buffer area correspondence table 54, the buffer area control portion 55, the data buffer 56, the first selector 58, and the second selector 59. Hereinafter, the data transfer processing device 5 according to the fifth embodiment will be described focusing on these different components.

The first DMAC 52 controls the first arbitration device 14 and the data buffer 56 with reference to the buffer area correspondence table 54. The second DMAC 53 controls the second arbitration device 15 and the data buffer 56 with reference to the buffer area correspondence table 54. The buffer area correspondence table 54 retains information relating to a source device in the data transfer that has requested the transfer data, such as base addresses and an optimal data buffer configuration for the source device in the data transfer. The buffer area control portion 55 controls addresses in the data buffer 56 to control buffer areas that are used by the first DMAC 52 and the second DMAC 53. More specifically, the buffer area correspondence table 54 and the buffer area control portion 55 function as buffer allocating portions. The first selector 58 accesses the system bus 6 and selects between a port for the first DMAC 52 and a port for the second DMAC 53 of the data buffer 56 according to the arbitration of the first arbitration device 14. The second selector 59 accesses the system bus 6 and selects between the port for the first DMAC 52 and the port for the second DMAC 53 of the data buffer 56 according to the arbitration of the second arbitration device 15. The data buffer 56 is a multi-port data buffer whose storage areas can be freely divided and used.

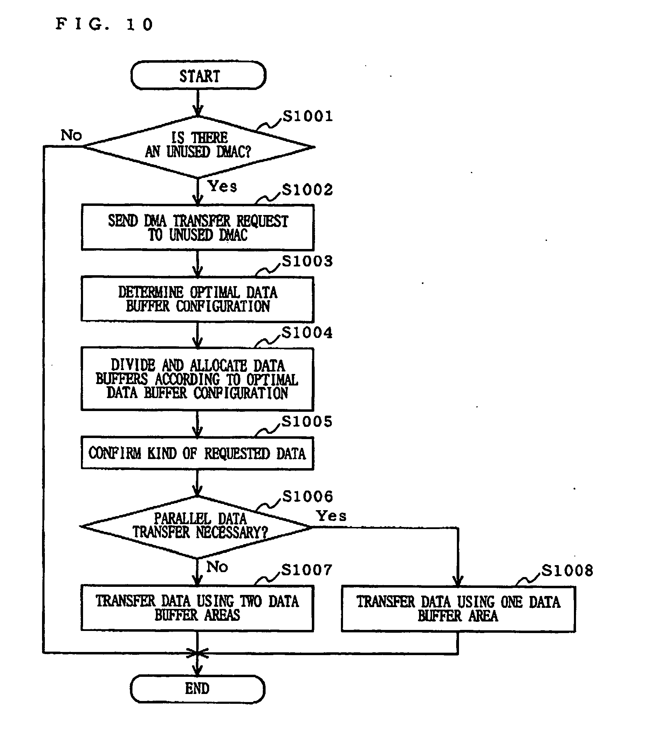

FIG. 10 is a flowchart showing the procedure of a data transfer processing method that is performed by the data transfer processing device 5 according to the fifth embodiment. The process in FIG. 10 is started when data transfer becomes newly necessary at the transfer processing portion 20.

First, the transfer processing portion 20 determines whether or not there is an unused DMAC that is not performing data transfer, that is, a DMAC that has not been started (step S1001). If there is an unused DMAC, the transfer request processing portion 20 starts the unused DMAC and gives it a DMA transfer request thereto (step S1002). This embodiment is explained for the case that the unused DMAC is the first DMAC 52. The first DMAC 52 that has received the DMA transfer request decides an optimal data buffer configuration in the data buffer 56 with reference to the buffer area correspondence table 54 and notifies it to the buffer area control portion 55 (step S1003). The optimal data buffer configuration is decided based on the base addresses of the source device in the data transfer. The buffer area control portion 55 receives the notification from the first DMAC 52, allocates unused areas in the data buffer 56 to the first DMAC 52 in accordance with the content of the notification, and gives the first DMAC 52 a response to the effect that the allocation has been performed (step S1004).

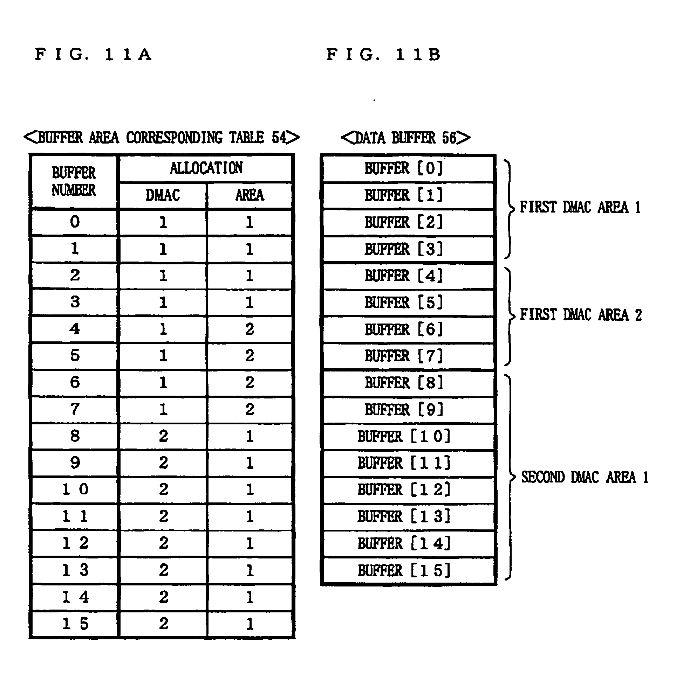

FIGS. 11A and 11B show an example of information in the buffer area correspondence table 54 and an allocation of the data buffer 56. When the storage areas of the data buffer 56 are configured by buffers [0] to [15] as shown in FIG. 11B, the DMAC and the area allocated to each of the buffers [0] to [15] are listed in the buffer area correspondence table 54 as shown in FIG. 11A. In the data buffer 56, areas are divided according to the content listed in the buffer area correspondence table 54.

The transfer request processing portion 20 confirms the kind of data that is required to transfer (step S1005). Then, based on the result of this confirmation, the transfer request processing portion 20 determines whether or not parallel data transfer is necessary (step S1006). According to this determination, the first DMAC 52 performs parallel data transfer using two data buffer areas or normal data transfer using one area (steps S1007 and 1008).

As described above, in the data transfer processing device and method according to the fifth embodiment, one large multi-port data buffer whose storage areas can be freely divided is used, and thus the area division is changed in accordance with the amount of data that is requested to transfer. Therefore, a large area is ensured in the data buffer, for example, when the amount of data that can be transferred continuously is large, and a small area suffices when the amount is small. Thus, regardless of a status in which data buffers for the other DMAC are used, it is possible to perform data transfer with an optimal data buffer configuration for the requested data transfer.

Function blocks such as transfer mode setting portion, status setting portion, DMAC, arbitration device, data buffer, data buffer arbitration control portion, selector, data buffer status flag, disconnection counting portion, buffer area correspondence table and buffer area control portion constituting a data transfer processing device of the present invention are typically realized by an LSI, which is an integrated circuit (referred to as, for example, IC, system LSI, super LSI, or ultra LSI, depending on the difference of the degree of integration). They may be formed on a single chip one by one, or may be formed on one chip in such a manner that a part or all of them are included.

The method of realizing an integrated circuit is not limited to an LSI; the integrated circuit may be realized using a dedicated circuit or general processor. Alternatively, it is also possible to use an FPGA (Field Programmable Gate Array) which can be programmed after the fabrication of the LSI, or a reconfigurable processor which enables the reconfiguration of the connections or settings of circuit cells in the LSI.

Further, with the advancement of semiconductor technologies or other technologies derived therefrom, if integrated circuit technologies which replace LSIs emerge, as a matter of course, the functional blocks may be integrated using such technologies. The applications of biotechnologies, etc., are possible cases.

While the invention has been described in detail, the foregoing description is in all aspects illustrative and not restrictive. It is understood that numerous other modifications and variations can be devised without departing from the scope of the invention.

## Claims

1. A data transfer processing device (3, or 4) that performs data transfer between a plurality of system buses operating under different protocols or frequencies by direct memory access transfer, comprising:
a plurality of data buffers (16-17) for storing transfer data temporarily,
a plurality of direct memory access controllers (22-23, 32-33, or 42-43) for performing data transfer between system buses by using at least one of the data buffers (16-17), and
a buffer allocating portion for dynamically allocating the data buffers (16-17) that are used by the plurality of direct memory access controllers (22-23,32-33, or 42-43) in accordance with a data transfer state,
wherein the buffer allocating portion includes a status setting portion (21) for setting information relating to the data buffers (16-17) that are actually used in data transfer by each of the plurality of direct memory access controllers (22-23), and
the direct memory access controllers (22-23) that are about to perform data transfer determine the data buffers (16-17) that can be used for their own data transfer in accordance with information set by the status setting portion (21),
**characterised by**
each of the plurality of direct memory access controllers (42-43) includes a disconnection counting portion (421-431) for storing a number of times that transfer is disconnected by a device to which the data is transferred while the data transfer is performed, and
when the number of times stored in the disconnection counting portions (421-431) reaches a predetermined number of times, the number of the used data buffers (16-17) is reduced for those direct memory access controllers (42-43) that use two or more of the data buffers (16-17).

2. The data transfer processing device according to claim 1,
wherein the buffer allocating portion further includes a data buffer arbitration control portion (30) for arbitrating a right to use the data buffers (16-17) that can be used, and
when the data buffers (16-17) that can be used for their own data transfer cannot be determined according to information set by the status setting portion (21), the direct memory access controllers (32-33) that are about to perform data transfer determine the data buffers (16-17) that can be used for their own data transfer according to a right of use given by the data buffer arbitration control portion (30).

3. A data transfer processing method by which a device provided with a plurality of data buffers for storing transfer data temporarily and a plurality of direct memory access controllers for performing data transfer between system buses by using at least one of the data buffers performs data transfer between a plurality of system buses operating under different protocols or frequencies by direct memory access transfer, the data transfer processing method comprising:
a step of determining a data transfer status on a system bus,
a step of dynamically allocating the data buffers that are used by the plurality of direct memory access controllers in accordance with the data buffers that are actually used in data transfer by each of the plurality of direct memory access controllers by a determination in the determining step,
a step of performing data transfer by using the data buffers allocated in the allocating step,
**characterised by**
a step of storing, each of the plurality of direct memory access controllers, a number of times that transfer is disconnected by a device to which data is transferred while the data transfer is performed, and
a step of reducing the number of the used data buffers of the direct memory access controllers that use two or more of the data buffers, when the number of times stored in the storing step reaches a predetermined number of times.

4. The data transfer processing method according to claim 3, further comprising:
a step of arbitrating a right to use the data buffers that can be used, and
a step of allocating the data buffers that can be used according to the right to use given, when the data buffers that can be used cannot be allocated in accordance with the data buffers that are actually used in data transfer by each of the plurality of direct memory access controllers.

## Patentansprüche

1. Datenübertragungs-Verarbeitungsvorrichtung (3 oder 4), die Datenübertragung zwischen einer Vielzahl von System-Bussen, die mit verschiedenen Protokollen oder Frequenzen arbeiten, durch Übertragung mit direktem Speicherzugriff durchführt, wobei sie umfasst:
eine Vielzahl von Daten-Puffern (16-17) zum temporären Speichern von Übertragungsdaten,
eine Vielzahl von DMA-Controllern (22-23, 32-33 oder 42-43) zum Durchführen von Datenübertragung zwischen System-Bussen unter Nutzung wenigstens eines der Daten-Puffer (16-17) und
einen Puffer-Zuweisungsabschnitt zum dynamischen Zuweisen der Daten-Puffer (16-17), die von der Vielzahl von der DMA-Controllern (22-23, 32-33 oder 43-43) genutzt werden, gemäß einem Datenübertragungsstatus,
wobei der-Puffer-Zuweisungsabschnitt einen Status-Festlegeabschnitt (21) zum Festlegen von Informationen bezüglich der Daten-Puffer (16-17) enthält, die tatsächlich bei Datenübertragung durch jeden der Vielzahl von DMA-Controllern (22-23) genutzt werden, und
die DMA-Controller (22-23), die unmittelbar davorstehen, Datenübertragung durchzuführen, die Daten-Puffer (16-17), die für ihre eigene Datenübertragung genutzt werden können, gemäß durch den Status-Festlegeabschnitt (21) festgelegter Informationen bestimmen,
**dadurch gekennzeichnet, dass**
jeder der Vielzahl von DMA-Controllern (42-43) ein Unterbrechungs-Zählabschnitt (421-431) enthält, der speichert, wie oft die Übertragung durch eine Einrichtung unterbrochen wird, zu der die Daten übertragen werden, während die Datenübertragung durchgeführt wird, und,
wenn die in dem Unterbrechungs-Zählabschnitt (421-431) gespeicherte Häufigkeit eine vorgegebene Häufigkeit erreicht, die Anzahl der genutzten Daten-Puffer (16-17) für die DMA-Controller (42-43) reduziert wird, die zwei oder mehr der Daten-Puffer (16-17) nutzen.

2. Datenübertragungs-Verarbeitungsvorrichtung nach Anspruch 1,
wobei der Puffer-Zuweisungsabschnitt des Weiteren einen Daten-Puffer-Arbitrierungs-Steuerabschnitt (30) enthält, der über ein Recht zum Verwenden der Daten-Puffer (16-17) entscheidet, die genutzt werden können, und
wenn die Daten-Puffer (16-17), die für ihre eigene Datenübertragung genutzt werden können, nicht gemäß den durch den Status-Festlegeabschnitt (21) eingestellten Informationen bestimmt werden können, die DMA-Controller (32-33), die unmittelbar davorstehen, Datenübertragung durchzuführen, die Daten-Puffer (16-17), die für ihre eigene Datenübertragung genutzt werden können, gemäß einem Nutzungsrecht bestimmen, das von dem Daten-Puffer-Arbitrierungs-Steuerabschnitt (30) gewährt wird.

3. Datenübertragungs-Verarbeitungsverfahren, mit dem eine Vorrichtung, die mit einer Vielzahl von Daten-Puffern zum temporären Speichern von Übertragungsdaten und einer Vielzahl DMA-Controllern zum Durchführen von Datenübertragung zwischen System-Bussen unter Verwendung wenigstens eines der Daten-Puffer versehen ist, Datenübertragung zwischen einer Vielzahl von System-Bussen, die mit verschiedenen Protokollen oder Frequenzen arbeiten, durch Übertragung mit direktem Speicherzugriff durchführt, wobei das Datenübertragungs-Verarbeitungsverfahren umfasst:
einen Schritt des Bestimmens eines Datenübertragungsstatus an einem System-Bus,
einen Schritt des dynamischen Zuweisens der Daten-Puffer, die durch die Vielzahl von DMA-Controllern genutzt werden, gemäß den Daten-Puffern, die tatsächlich bei Datenübertragung durch jeden der Vielzahl von DMA-Controllern genutzt werden, durch eine Bestimmung in dem Bestimmungsschritt,
einen Schritt des Durchführens von Datenübertragung unter Verwendung der in dem Zuweisungsschritt zugewiesenen Daten-Puffer,
**gekennzeichnet durch**
einen Schritt des Speicherns einer Häufigkeit, mit der Übertragung **durch** eine Vorrichtung unterbrochen wird, zu der Daten übertragen werden, während die Datenübertragung durchgeführt wird, an jedem der Vielzahl von DMA-Controllern, und
einen Schritt des Reduzierens der Anzahl der genutzten Daten-Puffer der DMA-Controller, die zwei oder mehr der Daten-Puffer nutzen, wenn die in dem Speicherschritt gespeicherte Häufigkeit eine vorgegebene Häufigkeit erreicht.

4. Datenübertragungs-Verarbeitungsverfahren nach Anspruch 3, das des Weiteren umfasst:
einen Schritt des Entscheidens über ein Recht zum Nutzen der Daten-Puffer, die genutzt werden können, und
einen Schritt des Zuweisens der Daten-Puffer, die genutzt werden können, gemäß dem gewährten Nutzungsrecht, wenn Daten-Puffer, die genutzt werden können, gemäß den Daten-Puffern, die tatsächlich bei Datenübertragung durch jeden der Vielzahl von DMA-Controllern genutzt werden, nicht zugewiesen werden können.

## Revendications

1. Dispositif de traitement de transfert de données (3, ou 4) qui réalise un transfert de données entre une pluralité de bus systèmes fonctionnant sous différents protocoles ou différentes fréquences par un transfert d'accès direct à la mémoire, comprenant :
une pluralité de mémoires tampons de données (16-17) pour stocker les données de transfert temporairement,
une pluralité de contrôleurs d'accès direct à la mémoire (22-23, 32-33, ou 42-43) pour réaliser un transfert de données entre des bus systèmes en utilisant au moins une des mémoires tampons de données (16-17), et
une partie d'attribution de mémoire tampon pour attribuer de manière dynamique les mémoires tampons de données (16-17) qui sont utilisées par la pluralité des contrôleurs d'accès direct à la mémoire (22-23, 32-33, ou 42-43) en fonction d'un état du transfert des données,
dans lequel la partie d'attribution de mémoire tampon comprend une partie de définition d'état (21) pour définir les informations se rapportant aux mémoires tampons de données (16-17) qui sont vraiment utilisées dans le transfert de données par chacune de la pluralité des contrôleurs d'accès direct à la mémoire (22-23), et
les contrôleurs d'accès direct à la mémoire (22-23) qui sont sur le point de réaliser un transfert de données déterminent les mémoires tampons de données (16-17) qui peuvent être utilisées pour leur propre transfert de données en fonction des informations définies par la partie de définition d'état (21),
**caractérisé par**
chacune de la pluralité des contrôleurs d'accès direct à la mémoire (42-43) comprend une partie de compte de déconnexion (421-431) pour stocker un nombre de fois que le transfert est déconnecté par un dispositif auquel les données sont transférées pendant que le transfert de données est réalisé, et
lorsque le nombre de fois stockées dans les parties de compte de déconnexion (421-431) atteint un nombre de fois prédéterminé, le nombre des mémoires tampons de données utilisées (16-17) est réduit pour ces contrôleurs d'accès direct à la mémoire (42-43) qui utilisent deux ou plusieurs des mémoires tampons de données (16-17).

2. Dispositif de traitement de transfert de données selon la revendication 1,
dans lequel la partie d'attribution de mémoire tampon comprend en outre une partie de contrôle d'arbitrage de la mémoire tampon de données (30) pour arbitrer un droit d'utiliser les mémoires tampons de données (16-17) qui peuvent être utilisées, et
lorsque les mémoires tampons de données (16-17) qui peuvent être utilisées pour leur propre transfert de données ne peuvent pas être déterminées en fonction des informations définies par la partie de définition d'état (21), les contrôleurs d'accès direct à la mémoire (32-33) qui sont sur le point de réaliser un transfert de données déterminent les mémoires tampons de données (16-17) qui peuvent être utilisées pour leur propre transfert de données en fonction d'un droit d'utilisation donné par la partie de contrôle d'arbitrage de la mémoire tampon de données (30).

3. Procédé de traitement de transfert de données par lequel un dispositif équipé d'une pluralité de mémoires tampons de données pour stocker les données de transfert temporairement et d'une pluralité de contrôleurs d'accès direct à la mémoire pour réaliser un transfert de données entre des bus systèmes en utilisant au moins une des mémoires tampons de données, réalise un transfert de données entre une pluralité de bus systèmes fonctionnant sous des protocoles différents ou des fréquences différentes par un transfert d'accès direct à la mémoire, le procédé de traitement de transfert de données comprenant les étapes suivantes :
une étape de détermination d'un état du transfert de données sur un bus système,
une étape d'attribution de manière dynamique des mémoires tampons de données qui sont utilisées par la pluralité des contrôleurs d'accès direct à la mémoire en fonction des mémoires tampons de données qui sont vraiment utilisées dans le transfert de données par chacune de la pluralité des contrôleurs d'accès direct à la mémoire par une détermination dans l'étape de détermination,
une étape de réalisation d'un transfert de données en utilisant les mémoires tampons de données attribuées dans l'étape d'attribution,
**caractérisé par**
une étape de stockage, chacune de la pluralité des contrôleurs d'accès direct à la mémoire, d'un nombre de fois que le transfert est déconnecté par un dispositif auquel les données sont transférées pendant que le transfert de données est réalisé, et
une étape de réduction du nombre des mémoires tampons de données utilisées des contrôleurs d'accès direct à la mémoire qui utilisent deux ou plusieurs des mémoires tampons de données, lorsque le nombre de fois stockées dans l'étape de stockage atteint un nombre de fois prédéterminé.

4. Procédé de traitement de transfert de données selon la revendication 3, comprenant en outre :
une étape d'arbitrage d'un droit d'utiliser les mémoires tampons de données qui peuvent être utilisées, et
une étape d'attribution des mémoires tampons de données qui peuvent être utilisées en fonction du droit d'utilisation donné, lorsque les mémoires tampons de données qui peuvent être utilisées ne peuvent pas être attribuées en fonction des mémoires tampons de données qui sont vraiment utilisées dans un transfert de données par chacune de la pluralité des contrôleurs d'accès direct à la mémoire.
